# EUROPEAN PATENT APPLICATION

(11) **EP 4 764 248 A1**
(43) Date of publication of application: **24.06.2026**
(21) Application number: 25224383.7
(22) Date of filing: 17.12.2025
(51) Int. Cl.: F16D 69/02, B33Y 80/00, C23C 24/10, C22C 14/00, B32B 15/01, B33Y 70/10, C23C 28/02, B33Y 10/00, B33Y 70/00, B22F 10/25, B22F 7/08, F16D 65/12, C23C 28/00, C23C 4/02

(54) **BRAKE DISC FOR DISC BRAKES AND METHOD FOR MAKING A BRAKE DISC FOR DISC BRAKES**

(30) Priority: 20.12.2024 IT 202400029385
(71) Applicant: BREMBO N.V., 24126 Bergamo (IT)
(72) Inventor: TARONI, Tommaso, I-24126 BERGAMO (IT); BERTONI, Francesco, I-24126 BERGAMO (IT); MEDICI, Stefano, I-24126 BERGAMO (IT); GRIGIS, Alberto, I-24126 BERGAMO (IT); BIONDO, Simone, I-24126 BERGAMO (IT)
(74) Representative: Zanettin, Gianluigi

(57) **Abstract**

The invention relates to a disc (1) for disc brakes, comprising a braking band (2), equipped with two opposing braking surfaces (2a, 2b), the braking band (2) being made of gray cast iron or steel. Said disk comprises: - a base layer (30) covering at least one of the two braking surfaces (2a, 2b) of the braking band (2), and - a bonding layer (3) which is interposed between said base layer (30) and the braking surface (2a, 2b). Said base layer (30) consists of a matrix of titanium and/or a titanium alloy comprising one or more carbides and defines a tribologically active surface of the disk (1); or said base layer (30) consists of a layer of titanium and/or a titanium alloy and is in turn covered by a coating layer (300), which in turn consists of a layer based on one or more carbides and defines a tribologically active surface of the disk (1). Said one or more carbides are selected from the group consisting of titanium carbide (TiC), tungsten carbide (WC), chromium carbide, niobium carbide (NbC), molybdenum carbide (Mo2C), and silicon carbide (SiC). Said bond layer (3) consists of a layer of titanium, or of a titanium or steel alloy. At the interface between said bond layer (3) and the braking band (2) in gray cast iron or steel there is a first intermediate interfusion layer (32) having a mixed composition between said bond layer (3) and the braking band (2). At the interface between said base layer (30) and said bond layer (3) there is a second intermediate interfusion layer (33) having a mixed composition between said base layer (30) and said bond layer (3). Said base layer (30) and said bond layer (3) both have a crystalline structure with a growth direction predominantly orthogonal to the braking surface.

## Description

### Field of application

The present invention relates to a disc for disc brakes and a method for making a disc for disc brakes.

### Prior art

A brake disc of a vehicle's disc braking system comprises an annular structure, or braking band, and a central fastening element, known as a bell, through which the disc is fastened to the rotating part of a vehicle suspension, for example a hub. The braking band is equipped with opposing braking surfaces suitable for cooperating with friction elements (brake pads), housed in at least one caliper body placed astride this braking band and integral with a non-rotating component of the vehicle suspension. The controlled interaction between the opposing brake pads and the opposing braking surfaces of the braking band causes a braking action by friction that allows the vehicle to decelerate or stop.

Generally, the brake disc is made of gray cast iron or steel. This material allows, in fact, to obtain good braking performance (especially in terms of wear containment) at relatively low costs. Discs made of carbon or carbon-ceramic materials offer far superior performance, but at much higher costs.

The limits of traditional discs, in cast iron or steel, are linked to excessive wear. As for gray cast iron discs, another very negative aspect is linked to excessive surface oxidation, with consequent rust formation. This aspect impacts both the performance of the brake disc and its appearance, as rust on the brake disc is unacceptable to the user from an aesthetic point of view.

This problem is particularly accentuated in brake discs for electric cars.

In fact, due to the regenerative power, electric cars foresee a reduction in the number of conventional brake applications. This leads to greater exposure of the disc to atmospheric agents per unit of time or per km traveled.

Corrosive products on the braking surface of the brake disc will therefore be present in greater quantities and for longer, increasing the phenomenon of rust formation. All this not only has negative consequences on the aesthetics of the disc, but also significantly affects braking performance and comfort.

One proposed solution is to paint the braking surface of the disc. The effectiveness of this solution is, however, limited in time as the paint is inevitably and quickly subject to wear. Furthermore, the paint layer negatively affects braking performance.

Attempts have been made to address these problems by making the discs in gray cast iron or steel with a protective coating. The protective coating serves on the one hand to reduce the wear of the disc, and on the other to protect the gray cast iron base from surface oxidation, thus avoiding the formation of a layer of rust.

Titanium and its alloys have some very attractive properties that allow them to be used in many sectors. Some of the aforementioned properties are: excellent corrosion and erosion resistance; low density, which confers high specific strength-to-weight ratios, allowing for lighter and more resistant structures; high temperature resistance and, in some cases, cryogenic properties.

Titanium and its alloys are, however, also characterized by modest tribological properties, such as poor resistance to abrasive wear, poor resistance to wear due to fatigue (fretting), and a high friction coefficient. All this has significantly limited the use of titanium and its alloys in mechanical engineering applications, and in particular in the brake disc sector.

The problem of tribological properties is related to the crystalline structure and reactivity of titanium and can be largely overcome by appropriate thermochemical treatments that superficially modify the titanium substrate making it harder. One of the most common thermochemical treatments of titanium and its alloys is nitriding.

To avoid the technical complexity of titanium nitriding, coatings based on Ti and Ti alloys have been proposed, made with the Cold Gas Spray (CGS) deposition technique, as described in EP4174212. These coatings have proven to be resistant to corrosion and wear, but suffer under operating conditions of delamination and generalized detachment.

The protective coatings currently available and applied to disks are made of particularly corrosion-resistant materials such as titanium and its alloys. While offering resistance to wear, they are subject to flaking that causes them to detach from the disk itself. Furthermore, such coatings are sensitive to the generation of thermal cracks during use and to the presence of cracks during their application.

Alternatively, coatings with iron-based metals (e.g. steel), made with the Laser Metal Deposition (LMD) technique, have been proposed. These coatings have proven to be an improvement over uncoated cast iron discs. However, although less prone to flaking and delamination than titanium or titanium alloy coatings, they do not meet the expectations of use. These coatings are, in fact, not very resistant to corrosion, having a resistance of a few tens of hours in SST.

Therefore, there is a particularly strong need for brake discs in gray cast iron or steel with coatings that ensure resistance to corrosion and wear, and at the same time are less prone to flaking or delamination, thus ensuring adequate thermal and mechanical performance and showing reliability over time.

### Presentation of the invention

Therefore, the main purpose of this invention is to eliminate, or at least reduce, the aforementioned problems relating to the known technique, by providing a brake disc for disc brakes that is resistant to corrosion and wear, and at the same time is less subject to flaking or delamination, thus ensuring adequate thermal and mechanical performance and showing reliability over time.

A further object of the present invention is to provide a brake disc for disc brakes that is easy and inexpensive to manufacture.

A further object of the present invention is to provide a method for making a brake disk for disk brakes that is resistant to corrosion and wear, and at the same time is less subject to flaking or delamination, in a way that is easily applicable on an industrial scale.

### Description of the drawings

The technical characteristics of the invention can clearly be seen in the content of the claims below and its advantages will become more readily apparent in the detailed description that follows, made with reference to the accompanying drawings, which illustrate one or more embodiments that are purely exemplary and not limiting, in which:
- Figure 1 shows a top plan view of a brake disc according to a first embodiment of the present invention;
- Figure 2 shows a sectional view of the disk of Figure 1 according to the section line II-II indicated therein;
- Figure 3 shows an enlarged detail of the section of Figure 2 framed in regard II;
- Figure 4 shows a top plan view of a brake disc according to a second embodiment of the present invention;
- Figure 5 shows a sectional view of the disk of Figure 4 according to the section line V-V indicated therein;
- Figure 6 shows an enlarged detail of the section of Figure 5 framed in the VI view.

### Detailed description

With reference to the aforementioned figures, 1 indicates a brake disc according to the present invention.

In accordance with a general embodiment of the invention, illustrated in the attached Figures, the brake disc 1 comprises a braking band 2, equipped with two opposing braking surfaces 2a and 2b, each of which at least partially defines one of the two main faces of the disc.

The braking band 2 can be made of gray cast iron or steel.

Preferably, the braking band 2 is made of gray cast iron. Preferably, the entire disk 1 is made of gray cast iron. In the following description, reference will therefore be made to a gray cast iron disc, without however excluding the possibility that it is made of steel.

Disc 1 includes:
- a base layer 30 covering at least one of the two braking surfaces 2a, 2b of the braking band 2;
   - - a bond layer 3 which is interposed between said base layer 30 and the braking surface 2a, 2b.

This bonding layer 3 is made in direct contact with the braking surface.

As will be clarified below, the expression "made in direct contact with the braking surface" means that the bond layer 3 was formed directly on the latter without the prior deposition of a bonding layer. This expression includes the possibility of forming any intermediate layers deriving from the metallurgical interaction between the bond layer and the braking surface determined by the deposition of said bond layer 3.

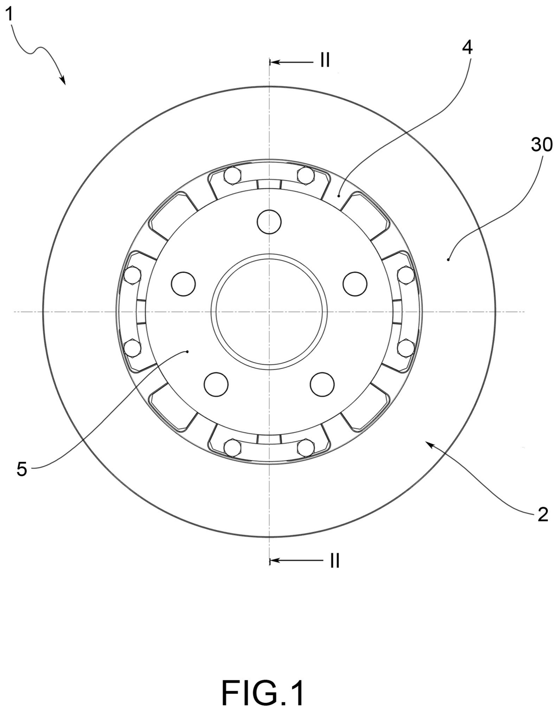

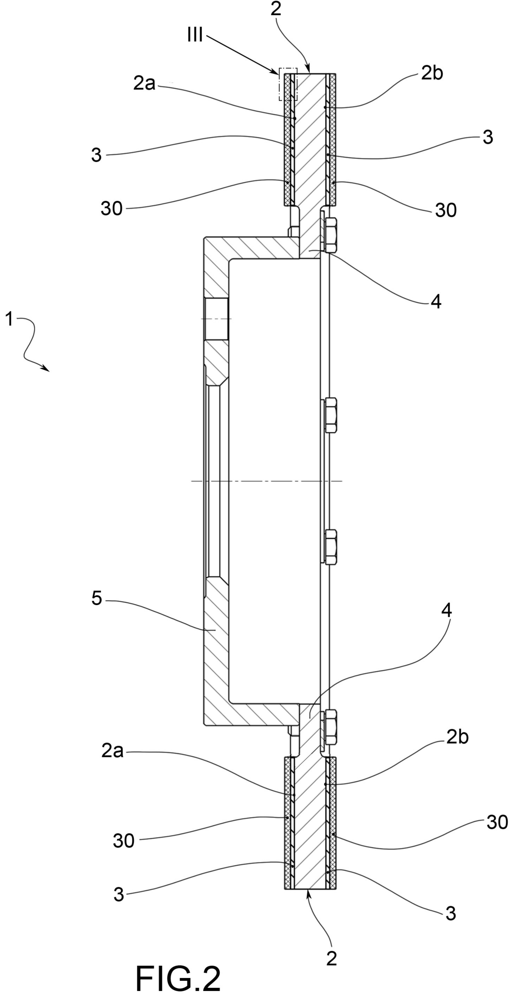

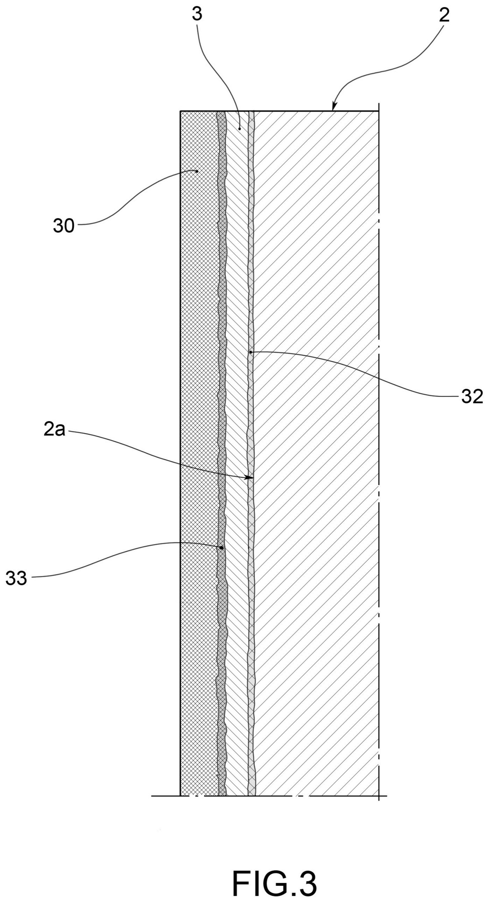

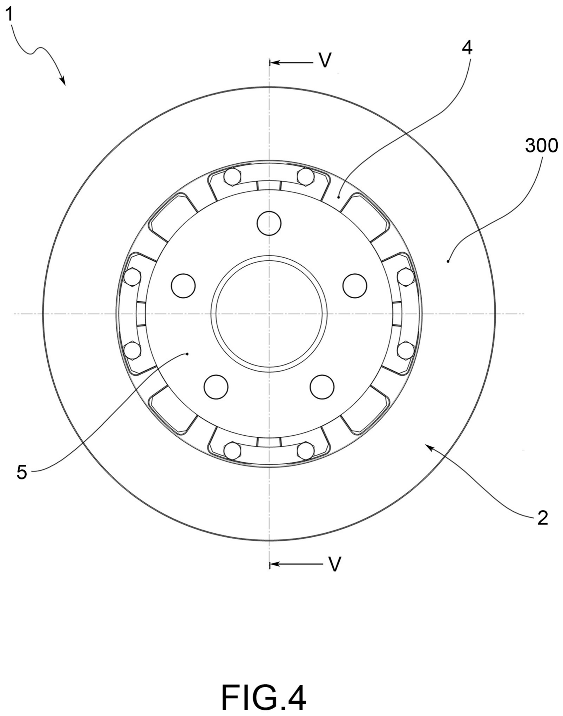

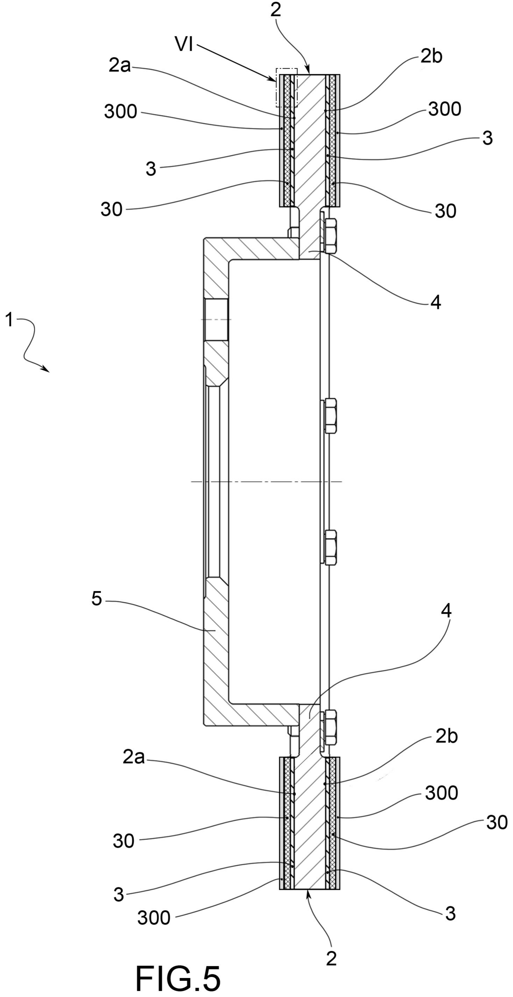

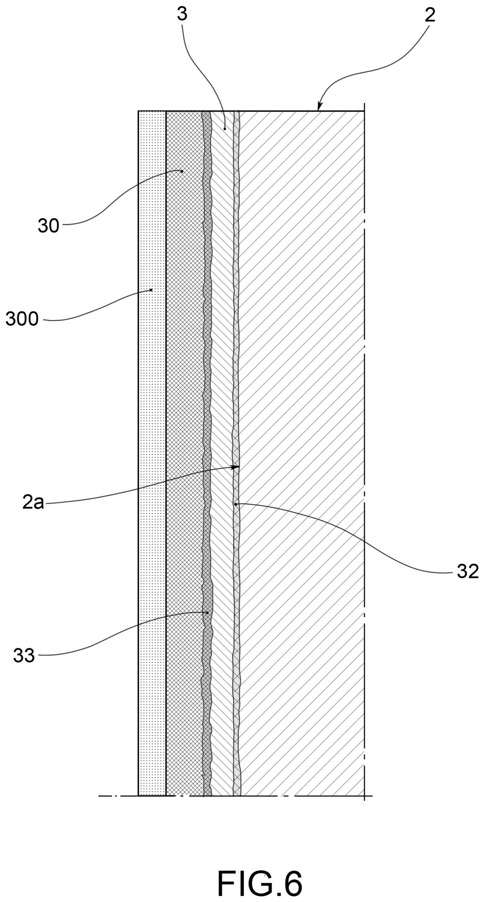

The base layer 30 can:
- consist of a titanium or titanium alloy matrix comprising one or more carbides and itself directly define a tribologically active surface of the disk 1 (as shown in Figures 1, 2 and 3); or
- consist of a layer of titanium or a titanium alloy and be in turn covered by a coating layer 300 (as shown in Figures 4, 5, and 6).

In turn, in this second case, the coating layer 300 consists of a layer based on one or more carbides and defines a tribologically active surface of the disk 1.

The term "tribologically active surface" means a surface of the brake disc on which the braking action of brake pads is directly exerted, with which a braking system of which the brake disc 1 is intended to be part is equipped.

Said one or more carbides are selected from the group consisting of titanium carbide (TiC), tungsten carbide (WC), chromium carbide (for example, Cr3C2), niobium carbide (NbC), molybdenum carbide (Mo2C), and silicon carbide (SiC).

The aforementioned bond layer 3 consists of a layer of titanium, a layer of a titanium alloy, or a layer of steel.

At the interface between the bond layer 3 and the braking band 2 in gray cast iron or steel there is a first intermediate interfusion layer 32 having a mixed composition between the bond layer 3 and the braking band 2.

At the interface between said base layer 30 and said bond layer 3 there is a second intermediate interfusion layer 33 having a mixed composition between said base layer 30 and said bond layer 3.

The base layer 30 and the bond layer 3 both have a crystalline structure with a growth direction that is predominantly orthogonal to the braking surface.

It has surprisingly been found that a base layer 30 and a bond layer 3 thus produced give the disc 1 resistance to corrosion and wear, and at the same time are not subject to flaking or delamination (or at least to an extremely small extent compared to coatings in titanium or its known alloys).

Disc 1 according to the invention thus ensures adequate thermal and mechanical performance, demonstrating reliability over time.

Without necessarily wishing to be bound by this theoretical explanation, in relation to the substantial absence of flaking or delamination, it has been hypothesized that:
- the two intermediate interfusion layers guarantee in sequence a very stable and resistant connection of the bond layer 3 to the braking band as well as of the base layer 30 to the bond layer 3, since each intermediate interfusion layer is the site of interpenetrations between the two parts; these interpenetrations oppose tensions parallel to the braking surface responsible for delamination and flaking;
- similarly, the crystalline structure with a growth direction predominantly orthogonal to the braking surface interrupts the possible propagation of cracks parallel to the braking surface, which are responsible for delamination and flaking.

The two aspects therefore cooperate synergistically in counteracting delamination and flaking phenomena.

In particular, these two aspects ensure proper adhesion to the braking surface in the presence of thermal loads during braking.

Corrosion resistance derives, instead, from the presence of titanium. In particular, the use of titanium or its alloy guarantees:
- corrosion resistance of hundreds of hours in SST
- excellent resistance to hot corrosion
- good mechanical ductility properties

The poor wear resistance of titanium is compensated by the presence of carbides, dispersed in the titanium or titanium alloy matrix that forms the base layer 30 or concentrated in the coating layer 300.

The use of a titanium alloy instead of pure titanium improves resistance to thermal shock during braking and at the same time increases hardness with advantages in terms of mileage and reduction of dust emissions.

The presence of the bond layer 3 also brings the following advantages:
- it improves the resistance to corrosion towards the braking band, in particular if the latter is made of gray cast iron,
- it prevents cracks on the base layer 30 in the presence of thermal loads from reaching the braking band, in particular if made of gray cast iron; the bond layer 3 protects the braking band as it is sufficiently ductile and resistant to corrosion.

For this purpose, the bond layer 3 is preferably made of pure titanium, precisely because of its ductility and corrosion resistance. Alternatively, with a view to containing costs, the bond layer 3 can be made of steel.

Thanks to the invention, it is therefore possible to make a brake disc that combines the corrosion resistance of titanium with wear resistance and with a substantial absence of delamination and flaking.

Preferably, the aforementioned bonding layer 3 is the result of the metallurgical bond that is created between at least one of said braking surfaces 2a, 2b and a first particulate composition deposited on said braking surface 2a, 2b with a deposition technique through the use of a laser beam, preferably by means of the Laser Metal Deposition (LMD) technique. Said first particle composition has a composition equivalent to that of said bond layer 3.

Preferably, the aforementioned base layer 30 is the result of the metallurgical bond that is created between said bonding layer 3 and a second particulate composition deposited on said bonding layer 3 with a deposition technique through the use of a laser beam, preferably by means of a Laser Metal Deposition (LMD) technique. Said second particulate composition has a composition equivalent to that of said base layer 30.

In particular, the aforementioned titanium alloy comprises aluminum, preferably with an aluminum content by weight of not less than 2%.

Advantageously, the aforementioned titanium alloy also comprises vanadium, preferably with a vanadium content of no less than 1% by weight.

Preferably, the aforementioned titanium alloy is an alloy of titanium, aluminum and vanadium, in which:
- aluminum is present with a weight content of between 2% and 8%;
- vanadium is present with a weight content of between 1% and 10%;
- the remaining part of said alloy being titanium.

Advantageously, the aforementioned bond layer 3 has a thickness of between 5 µm and 700 µm, preferably between 50 µm and 400 µm.

Advantageously, the aforementioned base layer 30 has a thickness of between 5 µm and 700 µm, preferably between 50 µm and 400 µm.

As already pointed out, the aforementioned base layer 30 may consist of a titanium matrix or a titanium alloy containing one or more carbides, wherein the weight content of carbides is between 2% and 80%. The amplitude of the range is linked to the fact that the density of the usable carbides is highly variable and is reflected in the % by weight. The values closest to 2% of the range are attributable to the lower carbide densities than that of Ti, while the values closest to 80% are attributable to those greater than that of Ti.

Alternatively, said base layer 30 may consist only of titanium or of said titanium alloy.

Advantageously, the coating layer 300 may consist of at least 60% by weight of one or more of said carbides, preferably at least 70% by weight. In this case, the aforementioned coating layer 300 is constituted by a metal matrix, preferably iron or aluminum based, for the remaining part.

Advantageously, the coating layer 300 can be obtained with:
- Thermal Spray deposition technique, for example with HVOF (High Velocity Oxy-Fuel) technique, or with HVAF (High Velocity Air Fuel) technique or with APS (Atmosphere plasma spray) technique; or
- with Cold Spray deposition technique, for example with KM (Kinetic Metallization) technique; or
- with a deposition technique using a laser beam, for example with the LMD (Laser Metal Deposition) technique, or with the HSLC - high speed laser cladding technique, or with the EHLA - Extreme High Speed Laser Application technique, or with the TSC - Top Speed Cladding technique.

Advantageously, if provided, the coating layer 300 has a thickness of between 10 µm and 150 µm, preferably between 30 µm and 120 µm.

For simplicity of discussion, the brake disk 1 will now be described together with the method according to the present invention. The brake disc 1 is preferably, but not necessarily, made with the method according to the invention that will now be described.

In accordance with a general form of implementation of the method according to the invention, the method comprises the following operating steps:
a) preparing a brake disk, comprising a braking band and equipped with two opposing braking surfaces, each of which at least partially defines one of the two main faces of the disk, the braking band being made of gray cast iron or steel;
a1) depositing a first particulate composition comprising titanium, a titanium alloy or steel on at least one of said braking surfaces 2a, 2b by means of a deposition technique using a laser beam, preferably by means of a Laser Metal Deposition (LMD) technique, forming a bond layer 3 covering at least one of the two braking surfaces (a, 2b of the braking band 2;
b) depositing a second particulate composition comprising titanium or a titanium alloy on said bond layer 3 by means of a deposition technique using a laser beam, preferably by means of a Laser Metal Deposition (LMD) technique, forming a base layer 30 covering said bond layer 3.

Advantageously, the deposition by means of a deposition technique using a laser beam, preferably by means of a Laser Metal Deposition (LMD) technique, allows:
- the formation of a first intermediate interfusion layer having a mixed composition between the bond layer 3 and the braking band 2, at the interface between the bond layer 3 and the braking band 2 in gray cast iron or steel;
- the formation of a second intermediate interfusion layer having a mixed composition between the bond layer 3 and the base layer 30, at the interface between the bond layer 3 and the base layer 30; and
- the formation of both the base layer 30 and the bond layer 3 having a crystalline structure with a growth direction predominantly orthogonal to the braking surface.

The method according to the invention comprises producing on said at least one braking surface a tribologically active coating layer comprising one or more carbides, according to two alternative methods:
a) including said one or more carbides in the second particulate composition to be deposited in step b), which in this case consists of titanium or a mixture of titanium and one or more titanium alloying metals, and in addition said one or more carbides; in this case, said tribologically active coating layer is constituted directly by said base layer 30;
   or
b) by depositing on top of said base layer 30 in a step c) subsequent to said step b) an additional layer 300 based on said one or more carbides, in which case the second particulate composition to be deposited in step b) consists of titanium or a mixture of titanium and one or more titanium alloying metals; in which case said tribologically active coating layer consists of said additional layer 300.

In both embodiments, said one or more carbides are selected from the group consisting of titanium carbide (TiC), tungsten carbide (WC), chromium carbide (e.g., Cr3C2), niobium carbide (NbC), molybdenum carbide (Mo2C), and silicon carbide (SiC).

In particular, the aforementioned titanium alloy comprises aluminum, preferably with an aluminum content by weight of not less than 2%.

Advantageously, the aforementioned titanium alloy also comprises vanadium, preferably with a vanadium content by weight of not less than 1%.

Preferably, the aforementioned titanium alloy is an alloy of titanium, aluminum, and vanadium, wherein:
- aluminum is present with a weight content of between 2% and 8%;
- vanadium is present with a weight content of between 1% and 10%;
- the remaining part of said alloy is titanium.

In particular, step a1) can be carried out until a thickness of between 5 µm and 700 µm, preferably between 50 µm and 400 µm, is obtained for said bonding layer 3.

In particular, step b) can be carried out until a thickness of between 5 µm and 700 µm, preferably between 50 µm and 400 µm, is obtained for said base layer 30.

Following the aforementioned method a), preferably, in the aforementioned second particle composition, the weight content of said one or more carbides is between xxx% and www%.

Following the aforementioned method b), preferably in said step c), said additional layer 300 is obtained by depositing a third particulate composition in which the weight content of said one or more carbides is at least 60% by weight, preferably at least 70% by weight. The third particle composition consists of a metal matrix, preferably iron or aluminum based, for the remaining part.

Advantageously, in said step c) the third particle composition can be deposited with:
- Thermal Spray deposition technique, for example with HVOF (High Velocity Oxy-Fuel) technique, or with HVAF (High Velocity Air Fuel) technique or with APS (Atmosphere plasma spray) technique; or
- with Cold Spray deposition technique, for example with KM (Kinetic Metallization) technique; or
- with a deposition technique using a laser beam, for example with the LMD (Laser Metal Deposition) technique, or with the HSLC - high speed laser cladding technique, or with the EHLA - Extreme High Speed Laser Application technique, or with the TSC - Top Speed Cladding technique.

In particular, step c) can be carried out until a thickness of between 10 µm and 150 µm, preferably between 30 µm and 120 µm, is obtained for said additional layer 300.

Advantageously, step a1) and step b) can be carried out by using at least one first laser beam having a power between 12 and 22 kW, preferably said laser beam being of the Gaussian or top-hat or top-hat ring type.

In step a1) and in step b), the first and second particle compositions are deposited with a single nozzle or with two or more nozzles.

Preferably, in step a1) and in step b) the first and second particle compositions are deposited:
- with a total flow rate of between 30 g/min and 300 g/min;
- with a tangential speed between 100 m/min and 250 m/min; and
- with a deposition rate of between 1 m2/h and 14 m2/h,

Advantageously, during step a1), upstream of the use of said first laser beam, a further laser beam having a power between 1 and 15 kW can be used, preferably said further laser beam being of the Gaussian or top-hat or top-hat ring type. Operationally, said further laser beam carries out a pre-treatment of at least one of said braking surfaces 2a, 2b on which the second particulate composition is intended to be deposited.

Advantageously, if proceeding with mode b), during step b), downstream of the use of said first laser beam, a further laser beam having a power between 1 and 20 kW may be used, preferably said further laser beam being of the Gaussian or top-hat or top-hat ring type. Operationally, said further laser beam performs a post-treatment of at least one of said braking surfaces 2a, 2b on which the second particulate composition was previously deposited to facilitate the adhesion of the additional layer 300.

According to one embodiment, the formation of a metallurgical bond between the substrate and the deposited or welded layers above said substrate occurs by means of one or more laser beams, for example a bifocal laser.

As can be appreciated from what has been described, the brake disk and the method for making this brake disk according to the invention allow the drawbacks presented in the known technique to be overcome.

It has surprisingly been verified that a brake disk 1 according to the invention combines resistance to corrosion and wear, and at the same time is not subject to flaking or delamination (or at least to an extremely reduced extent compared to coatings in titanium or its known alloys).

The disc 1 according to the invention thus ensures adequate thermal and mechanical performance, showing reliability over time.

Without necessarily wanting to be bound to this theoretical explanation, in relation to the substantial absence of flaking or delamination, it is assumed that:
- the two intermediate interfusion layers ensure in sequence a very stable and resistant connection of the bonding layer 3 to the braking band as well as the base layer 30 to the bonding layer 3, since each intermediate interfusion layer is the site of interpenetrations between the two parts; these interpenetrations oppose tensions parallel to the braking surface responsible for delamination and flaking;
- similarly, the crystalline structure with a growth direction predominantly orthogonal to the braking surface interrupts the possible propagation of cracks parallel to the braking surface, which are responsible for delamination and flaking.

The two aspects therefore cooperate synergistically in counteracting delamination and flaking phenomena.

In particular, these two aspects ensure proper adhesion to the braking surface in the presence of thermal loads during braking.

Corrosion resistance derives, instead, from the presence of titanium. In particular, the use of titanium or its alloy guarantees:
- corrosion resistance of hundreds of hours in SST
- excellent resistance to hot corrosion
- good mechanical ductility properties

The poor wear resistance of titanium is compensated by the presence of carbides, dispersed in the titanium or titanium alloy matrix that forms the base layer 30 or concentrated in the coating layer 300.

The use of a titanium alloy instead of pure titanium improves resistance to thermal shock during braking and at the same time increases hardness with advantages in terms of mileage and reduction of dust emission.

The presence of the bond layer 3 also brings the following advantages:
- it improves the resistance to corrosion towards the braking band, in particular if the latter is made of gray cast iron,
- it prevents cracks on the base layer 30 in the presence of thermal loads from reaching the braking band, in particular if made of gray cast iron; the bond layer 3 protects the braking band as it is sufficiently ductile and resistant to corrosion.

For this purpose, the bond layer 3 is preferably made of pure titanium, precisely because of its ductility and resistance to corrosion. Alternatively, with a view to cost containment, the bonding layer 3 can be made of steel.

Thanks to the invention, it is therefore possible to make a brake disc that combines the corrosion resistance of titanium with wear resistance and with a substantial absence of delamination and flaking.

The brake disc for disc brakes according to the invention is easy and inexpensive to manufacture.

Finally, the method according to the invention makes it possible to easily manufacture a brake disc for disc brakes on an industrial scale that is resistant to corrosion and wear, and at the same time is less prone to flaking or delamination.

## Claims

1. Disc (1) for disc brakes, comprising a braking band (2), equipped with two opposing braking surfaces (2a, 2b), the braking band (2) being made of gray cast iron or steel, said disc comprising:
- a base layer (30) covering at least one of the two braking surfaces (2a, 2b) of the braking band (2), and
- a bond layer (3) which is interposed between said base layer (30) and the braking surface (2a, 2b)
**characterized in that:**
- said base layer (30) consists of a titanium matrix and/or a titanium alloy comprising one or more carbides and defines a tribologically active surface of the disk (1); or
- said base layer (30) consists of a layer of titanium and/or a titanium alloy and is in turn covered by a coating layer (300), which in turn consists of a layer based on one or more carbides and defines a tribologically active surface of the disk (1);
wherein said one or more carbides are selected from the group consisting of titanium carbide (TiC), tungsten carbide (WC), chromium carbide, niobium carbide (NbC), molybdenum carbide (Mo2C), silicon carbide (SiC), wherein said bond layer (3) consists of a layer of titanium, or of a titanium or steel alloy **and by the fact that:**
- at the interface between said bond layer (3) and the braking band (2) in gray cast iron or steel there is a first intermediate interfusion layer (32) having a mixed composition between said bond layer (3) and the braking band (2),
- at the interface between said base layer (30) and said bond layer (3) there is a second intermediate interfusion layer (33) having a mixed composition between said base layer (30) and said bond layer (3),
said base layer (30) and said bond layer (3) both having a crystalline structure with a growth direction predominantly orthogonal to the braking surface.

2. Disc (1) according to claim 1, wherein said bond layer (3) is the result of the metallurgical bond that is created between at least one of said braking surfaces (2a, 2b) and a first particulate composition deposited on said braking surface (2a, 2b) with a deposition technique using a laser beam, preferably by means of a Laser Metal Deposition (LMD) technique, wherein said first particulate composition has a composition equivalent to that of said bond layer (3).

3. Disc (1) according to claim 1 or 2, wherein said base layer (30) is the result of the metallurgical bond that is created between said bond layer (3) and a second particle composition deposited on said bond layer (3) with a deposition technique using a laser beam, preferably by means of a Laser Metal Deposition (LMD) technique, wherein said second particle composition has a composition equivalent to that of said base layer (30).

4. Disc (1) according to claim 1, 2, or 3, wherein said titanium alloy comprises aluminum, preferably with an aluminum weight content of not less than 2%, wherein preferably said titanium alloy further comprises vanadium, preferably with a vanadium content by weight of not less than 1%, wherein more preferably said titanium alloy is an alloy of titanium, aluminum and vanadium, wherein aluminum is present with a weight content of between 2% and 8% and vanadium is present with a weight content of between 1% and 10%, the remaining part of said alloy being titanium.

5. Disc (1) according to any one of the preceding claims, wherein said bond layer (3) has a thickness of between 5 µm and 700 µm, preferably between 50 µm and 400 µm and/or wherein said base layer (30) has a thickness between 5 µm and 700 µm, preferably between 50 µm and 400 µm.

6. Disc (1) according to any one of the preceding claims, wherein said base layer (30) consists of titanium or of said titanium alloy or wherein said base layer (30) consists of a titanium matrix or a titanium alloy containing one or more carbides, wherein the weight content of carbides is between 2% and 80%.

7. Disc (1) according to any one of claims 1 to 6, wherein said coating layer (300) consists of at least 60% by weight of one or more of said carbides, preferably at least 70% by weight, wherein said coating layer (300) consists of a metal matrix for the remaining part.

8. Disc (1) according to any one of the preceding claims, wherein said coating layer (300) has a thickness of between 10 µm and 150 µm, preferably between 30 µm and 120 µm, more preferably between 50 µm and 90 µm.

9. Method for making a brake disc (1), comprising the following operating steps:
a) preparing a brake disk (1) comprising a braking band (2) equipped with two opposing braking surfaces (2a, 2b), the braking band being made of gray cast iron or steel; a1) depositing a first particulate composition comprising titanium, a titanium alloy, or steel on at least one of said braking surfaces (2a, 2b) by means of a deposition technique using a laser beam, preferably by means of a Laser Metal Deposition (LMD) technique, forming a bond layer (3) covering at least one of the two braking surfaces (2a, 2b) of the braking band (2);
b) depositing a second particulate composition comprising titanium or a titanium alloy on said bond layer (3) by means of a deposition technique using a laser beam, preferably by means of a Laser Metal Deposition (LMD) technique, forming a base layer (30) covering said bond layer (3) ;
wherein said method comprises forming on said at least one braking surface a tribologically active coating layer comprising one or more carbides:
- including said one or more carbides in the second particulate composition to be deposited in step b), which in this case comprises titanium or a mixture of titanium and one or more titanium alloying metals, and in addition said one or more carbides, in this case said tribologically active coating layer being constituted directly by said base layer (30);
or
- depositing on said base layer (30) in a phase c) subsequent to said phase b) an additional layer (300) based on said one or more carbides, in which case the second particulate composition to be deposited in phase b) consisting of titanium or a mixture of titanium and one or more titanium alloying metals, in which case said tribologically active coating layer is constituted by said additional layer (300),
wherein said one or more carbides are selected from the group consisting of titanium carbide (TiC), tungsten carbide (WC), chromium carbide, niobium carbide (NbC), molybdenum carbide (Mo2C), silicon carbide (SiC).

10. Method according to claim 9, wherein said titanium alloy comprises aluminum, preferably with an aluminum content by weight of not less than 2%, wherein preferably said titanium alloy further comprises vanadium, preferably with a vanadium content by weight of not less than 1% and wherein said titanium alloy is an alloy of titanium, aluminum and vanadium, wherein aluminum is present with a weight content of between 2% and 8% and vanadium is present with a weight content of between 1% and 10%, the remaining part of said alloy being titanium.

11. A method according to any one of claims 9 to 10, wherein step b) is carried out until a thickness of between 5 µm and 700 µm, preferably between 50 µm and 400 µm, is obtained for said bond layer (3) and/or wherein step b) is conducted until a thickness of between 5 µm and 700 µm, preferably between 50 µm and 400 µm, is obtained for said base layer (30).

12. Method according to any one of claims 17 to 22, wherein in said second particulate composition the weight content of said one or more carbides is between 2% and 80% and/or wherein in said step c) said additional layer (300) is obtained by depositing a third particulate composition in which the content by weight of said one or more carbides is at least 60% by weight, preferably at least 70% by weight, wherein preferably said third particulate composition consists of a metal matrix for the remaining part.

13. Method according to claim 12, wherein in said step c) the third particulate composition is deposited with:
- Thermal Spray deposition technique, for example with HVOF (High Velocity Oxy-Fuel) technique, or with HVAF (High Velocity Air Fuel) technique or with APS (Atmosphere plasma spray) technique; or
- with the Cold Spray deposition technique, for example with the KM (Kinetic Metallization) technique; or
- deposition technique using a laser beam, for example with LMD (Laser Metal Deposition) technique, or with HSLC
- high speed laser cladding technique, or with EHLA - Extreme High Speed Laser Application technique, or with TSC - Top Speed Cladding technique
And/or wherein phase c) is conducted until a thickness of between 10 µm and 150 µm, preferably between 30 µm and 120 µm, is obtained for said additional layer (300).

14. Method according to any one of claims 9 to 13, wherein step a1) and step b) are conducted by using at least one first laser beam having a power between 12 and 22 kW, preferably said laser beam being of the Gaussian or top-hat or top-hat ring type and/or wherein in said step a1) and in said step b) said first and second particulate compositions are deposited with a single nozzle or with two or more nozzles:
- with a total flow rate of between 30 g/min and 300 g/min;
- with a tangential speed between 100 m/min and 250 m/min;
- with a deposition rate between 1 m2/h and 14 m2/h..

15. Method according to claim 14, wherein during step a1), upstream of the use of said first laser beam, a further laser beam having a power between 1 and 15 kW is used, preferably said further laser beam being of the Gaussian or top-hat or top-hat ring type, said further laser beam performing a pre-treatment of at least one of said braking surfaces (2a, 2b) on which the first particulate composition is intended to be deposited and/or wherein during step b), downstream of the use of said first laser beam, a further laser beam having a power between 1 and 20 kW is used, preferably said further laser beam being of the Gaussian or top-hat or top-hat ring type, said further laser beam performing a post-treatment of at least one of said braking surfaces (2a, 2b) on which the second particulate composition has been previously deposited.
